# EUROPEAN PATENT APPLICATION

(11) **EP 3 757 612 A1**
(43) Date of publication of application: **30.12.2020**
(21) Application number: 19758003.8
(22) Date of filing: 25.02.2019
(51) Int. Cl.: G01S 13/93, B60W 50/14, B60W 30/08, B60W 40/072, B60R 11/02, G07C 5/08

(54) **VEHICLE RADAR SYSTEM FOR DETECTING DANGEROUS GOODS**

(30) Priority: 23.02.2018 KR 20180021661; 22.02.2019 KR 20190021399
(71) Applicant: BITSENSING INC., Seoul 06247 (KR)
(72) Inventor: LEE, Jae Eun, Seoul 06049 (KR)
(74) Representative: BCKIP
(86) International application number: PCT/KR2019/002288
(87) International publication number: WO 2019/164372

(57) **Abstract**

The present disclosure provides a vehicle radar system capable of detecting the appearance of dangerous objects with higher reliability. Further, the present disclosure provides a vehicle radar system that can provide both safety and convenience of a driver by combining a radar sensor with a black box or a navigation device which is almost a necessity for vehicles. Accordingly, the present disclosure provides a vehicle radar system in which a radar sensor is installed in a vehicle to calculate the speed of the host vehicle during driving, detect an object appearing ahead of the vehicle, calculate a relative speed between the host vehicle and the object, link the radar sensor to a user device, such as a smartphone of the driver, or a navigation device through near-field communication and issue a warning through the user device or the navigation device depending on the distance to the appearing object.

## Description

### TECHNICAL FIELD

The present disclosure relates to a vehicle radar system for safe vehicle driving.

### BACKGROUND

When a vehicle is driven in heavy fog or at night under street lights, the vehicle cannot detect a suddenly oncoming object, which is a great threat to safe driving. This problem can be largely solved by installing a radar in the vehicle. This is because the radar can transmit and receive electromagnetic waves to detect all objects appearing hundreds of meters away from the vehicle, detect a relative speed between a moving vehicle and an object, and detect an object on a road even in fog or heavy rain. Such a radar system showing a strong resistance to environmental influences is installed as an option in an expensive vehicle in a manufacturing process of the vehicle and is operated to enable autonomous driving in conjunction with driving of the accelerator and the brake of the engine. However, a normal vehicle is not equipped with such a safety device and thus is not free from safety threats during driving.

Meanwhile, recently, radar devices have become cheaper and applied to various security systems. Therefore, it is possible to pursue driving safety by installing a low-priced radar device in a normal vehicle.

Utility Model Registration No. 20-0469656 suggests a system that calculates vehicle speed and direction data based on GPS by applying a radar sensor and generates a warning depending on a safety distance. However, the GPS is not available in a tunnel and intermittently disconnected, which makes it difficult to ensure safe driving.

### DISCLOSURE OF THE INVENTION

### PROBLEMS TO BE SOLVED BY THE INVENTION

In view of the foregoing, the present disclosure provides a vehicle radar system capable of detecting the appearance of dangerous objects with higher reliability.

Further, the present disclosure provides a vehicle radar system that can provide both safety and convenience of a driver by combining a radar sensor with a black box or a navigation device which is almost a necessity for vehicles.

### MEANS FOR SOLVING THE PROBLEMS

An aspect of the present disclosure provides a vehicle radar system in which a radar sensor is installed in a vehicle to calculate the speed of the host vehicle during driving, detect an object appearing ahead of the vehicle, calculate a relative speed between the host vehicle and the object, link the radar sensor to a user device, such as a smartphone of the driver, or a navigation device through near-field communication and issue a warning through the user device or the navigation device depending on the distance to the appearing object.

In the above description, the radar sensor calculates the speed of the host vehicle by determining surrounding stationary objects or analyzing a spectrum of received signals and calculates the relative speed between the object and the host vehicle depending on the real-time measured position of the appearing object.

In the above description, the radar sensor is linked to a smartphone, a tablet computer or a navigation device through near-field communication such as Bluetooth, NFC and ZigBee, and issues a warning sound and/or a warning image depending on a time-to-collision based on the distance and/or relative speed between the object and the host vehicle.

Further, the present disclosure can provide the radar sensor as a black box-integrated danger detection system by integrating the radar sensor in a black box.

Furthermore, in the present disclosure, when the radar sensor is linked to the navigation device, the position of the object detected by the radar sensor may be superimposed and displayed on a map displayed by the navigation device.

Moreover, in the present disclosure, an application is installed on the user device of the driver in order for the radar sensor to issue a warning signal when detecting an object.

Besides, in the present disclosure, radar sensors may be further installed on both ends, respectively, of the rear of the vehicle in addition to the front of the vehicle and may issue a warning signal in case of a lane change.

### EFFECTS OF THE INVENTION

According to the present disclosure, a radar sensor is installed in a normal vehicle and can detect the appearance of an object ahead of the vehicle through near-field communication between a smartphone or a navigation device of the driver without using GPS and issue a warning. Therefore, it is possible to protect the safety of the driver with high reliability.

In other words, according to the present disclosure, the radar itself calculates a relative speed between the object and the host vehicle without using the GPS, determines a threshold time based on a collision time and issues a warning. Therefore, the driver can receive a detection result and a warning of the appearance of a dangerous object from the radar sensor even when driving in a tunnel where the GPS is disconnected or not available.

Further, according to the present disclosure, if the radar sensor is linked to the navigation device, a detected position of the appearing object is displayed on a map screen of the navigation device. Therefore, it is possible to obtain more convenient road information.

Furthermore, according to the present disclosure, the radar sensor is integrated with a black box since the black box is installed at a position where the best field-of-view of the vehicle can be obtained, and, thus, the radar sensor can be installed by installing the black box. Therefore, it is easy to install the radar sensor. Also, it is possible to avoid positional interference between the black box and the radar sensor.

Moreover, according to the present disclosure, a radar sensor with a wider viewing angle is installed on the rear of the vehicle. Therefore, the driver can receive a warning signal when changing a lane and thus can change a lane more safely.

### BRIEF DESCRIPTION OF THE DRAWINGS

**FIG. 1** is a schematic diagram for explaining an object detection by a vehicle radar system according to the present disclosure.
**FIG. 2** is a schematic diagram illustrating a wide detection angle of a radar sensor installed on the rear of a vehicle according to a modified example of **FIG. 1****.**
**FIG. 3** illustrates an example of a frequency of a radar sensor in a vehicle radar system according to an embodiment of the present disclosure.
**FIG. 4** illustrates an example of a frequency peak extracted by a vehicle radar system according to an embodiment of the present disclosure.

### BEST MODE FOR CARRYING OUT THE INVENTION

Hereafter, embodiments of the present disclosure will be described in detail with reference to the accompanying drawings.

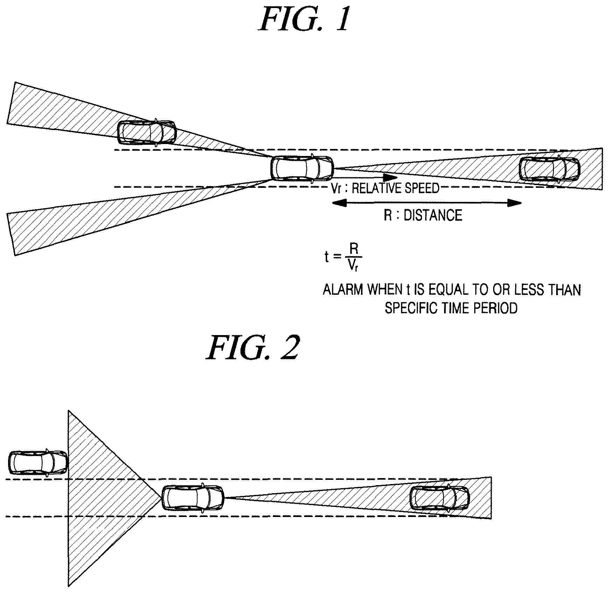

**FIG. 1** illustrates an installation example of a vehicle radar sensor system according to the present disclosure.

A radar sensor that is not affected by environmental influences, such as fog, rain and strong winds, can detect an object appearing 150 to 200 meters ahead with high reliability during driving. Further, if a calculation module is provided in the radar sensor, the driving speed of the host vehicle can be estimated by receiving electromagnetic waves transmitted from a radar to surrounding stationary objects and analyzing a spectrum.

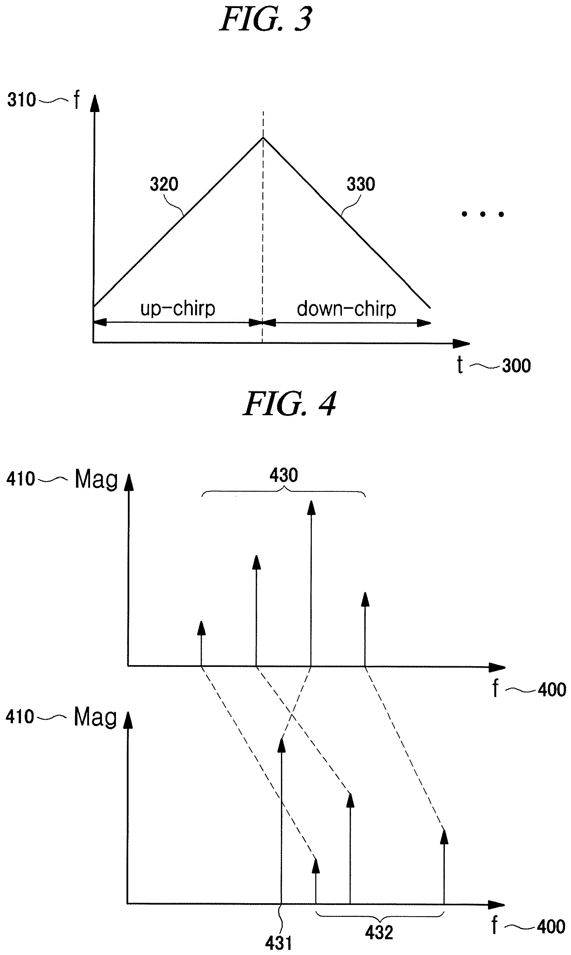

Hereinafter, a process of estimating the driving speed of the host vehicle will be described with reference to **FIG. 3** and **FIG. 4****.**

**FIG. 3** illustrates an example of a frequency of a radar sensor in a vehicle radar system according to an embodiment of the present disclosure. **FIG. 3** shows a frequency (f) 310 of a transmission electromagnetic wave transmitted using a radar sensor of a slow chirp frequency modulation continuous wave (FMCW) depending on time (t) 300. The frequency 310 can be formed by an up-chirp 320 and a down-chirp 330.

**FIG. 4** illustrates an example of a frequency peak extracted by a vehicle radar system according to an embodiment of the present disclosure. Referring to **FIG. 3** and **FIG. 4****,** a frequency peak 430 depending on a magnitude 410 of a frequency 400 of a reception electromagnetic wave illustrated in **FIG. 4** can be extracted according to the up-chirp 320 and the down-chirp 330 of the frequency 310 of the transmission electromagnetic wave illustrated in **FIG. 3****.**

The radar system of the present disclosure can receive reception electromagnetic waves including peaks of respective unpaired frequencies, analyze the reception electromagnetic waves and extract and pair the frequencies corresponding to the up-chirp and the down-chirp, respectively. According to the pairing result, the frequencies corresponding to the up-chirp and the down-chirp can be graphed as shown in **FIG. 4****.** For example, the top graph of **FIG. 4** is a graph of the peaks of the respective frequencies in the up-chirp, and the bottom graph is a graph of the peaks of the respective frequencies in the down-chirp. Through the pairing process, the peaks of the respective frequencies in the up-chirp and the peaks of the respective frequencies in the down-chirp can be extracted and paired as indicated by the dotted line.

For example, as for a stationary object, when the vehicle is stationary, the same frequencies 432 may be extracted in the up-chirp and the down-chirp, respectively. However, when the vehicle moves, a frequency 431 may be shifted in opposite directions by the magnitude of the speed. As such, when the vehicle is stationary, it is easy to pair the frequencies in the up-chirp and the down-chirp, respectively, but in a real situation where the vehicle moves, there are many frequency peaks and it is not easy to pair the peaks in the up-chirp and the down-chirp, respectively.

Therefore, by analyzing an interval difference between frequency peaks in the process of pairing the peaks in the up-chirp and the down-chirp, it is possible to previously extract the frequency peak 432 corresponding to the stationary object and thus possible to estimate the speed of the host vehicle.

Referring to **FIG. 1** again, it is possible to calculate a relative speed and a time-to-collision, which is the time left until a collision occurs, by analyzing a frequency of an electromagnetic wave transmitted by the vehicle radar system to the object appearing ahead and then reflected and received from the object. If the radar sensor is combined with a GPS sensor, it is easy to calculate the speed of the host vehicle and a relative speed of the host vehicle and the object and it is easy to link the sensor to a smartphone. However, in consideration of the disadvantages of the GPS such as disconnection and non-availability in a tunnel, the radar sensor of the present disclosure is combined with the calculation module as described above in addition to the GPS sensor in order to increase the reliability in safety.

Hereinafter, a process of calculating the time-to-collision by calculating a relative speed with respect to an object will be described.

The radar sensor may detect a relative speed with respect to an object when the host vehicle moves. For example, when a communication module receives vehicle speed information through communication with the vehicle, the calculation module may calculate the speed of each object by adding the speed of the vehicle and relative speeds with respect to the respective objects detected by the radar sensor. For another example, when the communication module cannot receive vehicle speed information through communication with the vehicle, the speed of the host vehicle is first estimated by using objects detected by the radar sensor and then relative speeds with respect to the respective objects are added to the estimated speed of the host vehicle, and, thus, the speed of each object can be calculated.

The time-to-collision can be derived based on T = R (distance between the host vehicle and another vehicle)/ V (relative speed between the host vehicle and another vehicle). For example, the time-to-collision (TTC) is derived from the distance and relative speed between the host vehicle and another vehicle in a collision risk situation, and R and V values at that moment are assumed as fixed values (R and V values are assumed as fixed values within a cycle time because the cycle time is fast). Thus, the risk at that moment can be determined by the TTC. Herein, the TTC may be calculated for each cycle time (update time) to determine the risk at the moment, and a warning of the risk of collision may be issued depending on the TTC.

According to the present disclosure, the vehicle radar system including the radar sensor combined with the calculation module may be linked to a user device, such as a smartphone of the driver, or a vehicle navigation device to notify the driver of a danger detected by the radar. When an application installed on a smartphone or tablet device is executed, the application enables the smartphone or tablet device to communicate with the calculation module of the radar sensor through near-field communication, and when a TTC with an object appearing ahead reaches a predetermined threshold value, an alarm is issued. The alarm may be implemented as a voice message or a warning sound and designed to sound more frequently or louder as a threshold time decreases. A danger sign may be displayed on a screen of the user device and accumulated as road-related information even though it has a lower efficiency than a voice alarm.

If the navigation device is linked to the calculation mode of the radar sensor, the navigation device may be configured to issue a warning sound or a warning message. In this case, the warning sound or the warning message may also be designed to sound more frequently or louder as the collision threshold time decreases.

Further, since a map including driving roads is displayed on the navigation device, position information of an object detected by the radar sensor can be displayed on the navigation map. In this case, a GPS module needs to be installed to obtain the position information of the object from the radar sensor and display the position information of the object on the navigation map.

Meanwhile, the radar sensor may be installed in a conventional black box. Accordingly, the present disclosure can provide a vehicle radar system in which the black box and the radar sensor are integrated. A camera module, the radar sensor and the calculation module (including the communication module) are combined and installed where the black box has been installed, and, thus, a danger detection and a warning operation can be performed along with front image recording.

If the radar sensor is integrated with the black box, it can operate in two ways. For example, if a single processor (e.g., MCU, DSP, etc.) is used, each of the radar and the camera (black box) may be controlled and scheduled. For another example, if processors for the radar sensor and the black box, respectively, are used, the radar sensor and the black box may operate in a master-slave mode and scheduling is managed by the master.

Here, if the radar is integrated with the black box, the position of an antenna unit of the radar and the position of a module of the camera do not overlap each other. Also, the position of the radar needs to be considered to suppress beam distortion depending on the field-of-view (FOV) of the radar antenna. Further, if the radar is integrated with the black box, the FOV, lens position and shape of the camera need to be also considered.

Furthermore, as a result of the radar detection, threshold time information on a collision risk time of the vehicle may be transmitted to an imaging module of the black box to record a dangerous situation. This is particularly useful when the black box does not perform recording all the time, and it is possible to obtain an effect of displaying a dangerous situation on the screen even when the black box performs recording all the time. In some cases, the black box may be designed to perform high-resolution recording at that moment.

For example, when a TTC between the vehicle and an object is equal to or less than a predetermined threshold value, the vehicle radar system may determine this situation as a dangerous situation and to be recorded through the black box. Here, the vehicle radar system may estimate the moving path of each vehicle not only in front of the host vehicle but also changing its driving direction at an intersection or the like, and, thus, a collision warning can be issued in a dangerous situation (for example, a collision is expected) and the dangerous situation can be recorded through the black box. Even if the black box is not integrated with the radar, a recording command linked to the black box as described above may be usefully applied. That is, the black box transmits threshold time information on a collision risk time of the vehicle to the imaging module of the black box by communicating with the communication module through near-field communication in order for the imaging module to record a dangerous situation.

The dangerous situation to be recorded through the black box as described above may include, for example, when a relative speed suddenly changes (for example, a sudden stop of the host vehicle or a sudden stop of another vehicle), the distance between the other vehicles suddenly changes (for example, a third vehicle cuts into the lane), steering of the host vehicle suddenly changes, the number of surrounding objects detected within a specific distance is equal to or more than a predetermined number, and a movement of one of objects detected around the host vehicle is abnormal (for example, an object from the opposing lane crosses the median and an object that abruptly moves in a lateral direction from a lane far from the host vehicle's lane is detected).

In the above description, the radar sensor may be linked to the smartphone, the tablet computer or the navigation device through near-field communication such as Bluetooth, NFC and ZigBee.

Further, according to the present disclosure, radar sensors may be further installed on both ends, respectively, of the rear of the vehicle in addition to the front of the vehicle and may issue a warning signal in case of a lane change. **FIG. 1** shows the configuration in which a total of three radar sensors with a field-of-view (FOV) ranging from about -10° to about 10° are installed on the front of the vehicle and on the both ends, respectively, of the rear of the vehicle to detect a danger ahead and secure safety during a lane change. If an object is detected within a predetermined threshold distance during a lane change, the user device (a smartphone, a tablet computer and a navigation device) also issues a warning alarm. This configuration can be implemented by using near-field communication and installing an application or providing a program module in the navigation device.

**FIG. 2** shows that both a front radar sensor and a rear radar sensor are installed in the center of the vehicle. A radar sensor with a wider FOV is selected and installed as the rear radar sensor. A radar sensor with an FOV ranging from about -60° to about 60° in a short distance ranging from 60 m to 80 m is selected and installed on the rear of the vehicle. The above-described numerical ranges are merely preferred examples and can be somewhat changed.

In the above description, a method of warning may include issuing a warning sound, issuing a voice warning or image warning through the user application, or issuing a warning signal on the map screen of the navigation device in conjunction with the navigation device. The warning may be made by displaying the speed of the host vehicle or the distance to an object on the side of or behind the host vehicle on the screen of the user device or the map screen of the navigation device and/or telling the speed of the host vehicle or the distance to an object on the side of or behind the host vehicle via voice message.

Further, the user device may receive map information from the navigation device by exchanging information with a navigation application, determine whether an oncoming object exists in the host vehicle's lane by calculating the curvature of a road ahead, and display it on the screen of the user device or notify it by voice.

Meanwhile, in **FIG. 1** and **FIG. 2****,** the warning alarm may also be implemented as a flashing signal by installing a separate LED in the vehicle in addition to the sound message and the screen display.

Also, a radar sensor may be further installed on the rear of the vehicle in addition to the front of the vehicle to detect an object behind or on the side of the vehicle during a lane change, and when the radar sensor determines that a collision with the object is likely to occur within a predetermined threshold time, the user device may issue a warning signal.

Further, a method of warning may include issuing a warning sound, issuing a voice warning or image warning through the user application, or issuing a warning signal on the map screen of the navigation device in conjunction with the navigation device. The warning may be made by displaying the speed of the host vehicle or the distance to an object on the side of or behind the host vehicle on the screen of the user device or the map screen of the navigation device. According to another embodiment of the present disclosure, a radar sensor for near-field detection may be provided inside the vehicle to detect the driver's condition. The driver's condition may include vital information such as breathing, heart rate and the like.

For example, if the vehicle radar system estimates that the driver is dozing off while driving based on the detected driver's condition, it may issue a warning via light, sound, vibration, and the like through the user device, the navigation device, and the like. Alternatively, the vehicle radar system may issue a warning or may alert the driver by using vibration, microcurrent, and the like in conjunction with a wearable device.

For another example, the vehicle radar system may collect driver monitoring information from a server in conjunction with the smartphone, and when a predetermined amount of information is collected, the vehicle radar system may analyze the driver's biosignal pattern by analyzing the data to issue a prior warning for safe driving or alert the driver. Alternatively, the vehicle radar system may guide the driver to a suitable path for the driver's pattern in conjunction with a navigator in the smart phone and may also guide the driver to an appropriate time for rest.

For yet another example, the vehicle radar system may sense not only the driver's seat but also the passenger seat and warn the passengers to fasten their seat belts. For example, a radar may be provided within each of the driver's seat and the passenger seat to sense whether the passengers fasten their seat belts and issue a warning thereof.

For still another example, the vehicle radar system may monitor the vitals of the passengers in the driver's seat and the passenger seat to automatically make an emergency call when an abnormality occurs.

As described above, a vehicle radar system that enables safe driving of a vehicle can be implemented.

The scope of rights of the present disclosure is not limited to the embodiments described above, but is defined by the claims, and it is obvious to a person with ordinary skill in the art that various modifications and changes can be made within the scope of the claims.

## Claims

1. A vehicle radar system, comprising:
a radar sensor installed in a vehicle;
a calculation module configured to analyze a transmission electromagnetic wave and a reception electromagnetic wave of the radar sensor; and
a communication module configured to communicate a result of calculation from the calculation module with a user device within the vehicle,
wherein the calculation module calculates a time-to-collision between the vehicle and an object appearing ahead of the vehicle by analyzing an electromagnetic transmission/reception spectrum of the radar sensor, and
when the time-to-collision reaches a predetermined threshold time, the user device issues a warning.

2. The vehicle radar system of Claim 1,
wherein the user device includes a smartphone, a tablet computer, a black box or a navigation device, and
the communication module performs communication through near-field communication including Bluetooth, NFC or ZigBee, and
the warning includes the issuance of a warning sound, the flashing of a warning light or the display of a warning image.

3. The vehicle radar system of Claim 1,
wherein the vehicle radar system is integrated with a black box into a black box-integrated system.

4. The vehicle radar system of Claim 3,
wherein the communication module transmits, to an imaging module of the black box, a radar detection result and threshold time information on a collision risk time of the vehicle, and
the black box records a dangerous situation.

5. The vehicle radar system of Claim 4,
wherein if the user device is a black box, the communication module communicates with the black box through near-field communication and transmits, to an imaging module of the black box, threshold time information on a collision risk time of the vehicle, and
the black box records a dangerous situation.

6. The vehicle radar system of Claim 1,
wherein the calculation module further includes a GPS module, and
the communication module is linked to a navigation device through near-field communication, and
the position of the object detected by the radar sensor is superimposed and displayed on a map displayed by the navigation device.

7. The vehicle radar system of Claim 1,
wherein the user device issues a warning signal through an application installed on the user device.

8. The vehicle radar system of Claim 6,
wherein the communication module transmits, to an application installed on the navigation device, information about a warning signal indicating that threshold time has been reached as detected by the radar sensor, and
the warning signal is issued through the application installed on the navigation device.

9. The vehicle radar system of Claim 8,
wherein the user device receives map information from the navigation device by exchanging information with the application installed on the navigation device and determines whether an oncoming object exists in the host vehicle's lane by calculating the curvature of a road ahead.

10. The vehicle radar system of Claim 1,
wherein the radar sensor is further installed on the rear of the vehicle, and
the radar sensor detects an object behind or on the side of the vehicle during a lane change of the vehicle, and
when the calculation module determines that a collision with the object behind or on the side of the vehicle is likely to occur within a predetermined threshold time, the user device issues a warning signal.

11. The vehicle radar system of Claim 10,
wherein a method of warning includes issuing a warning sound, issuing a voice warning or image warning through an application installed on the user device, or issuing a warning signal on a map screen of the navigation device in conjunction with the navigation device, and the warning is made by displaying the speed of the vehicle or the distance to the object behind or on the side of the vehicle on a screen of the user device or the map screen of the navigation device.
